# EUROPEAN PATENT APPLICATION

(11) **EP 1 188 369 A2**
(43) Date of publication of application: **20.03.2002**
(21) Application number: 01204572.0
(22) Date of filing: 19.05.1998
(51) Int. Cl.: A01K 5/00, A01D 90/02

(54) **Method and device for mixing and/or loosening fodder**

(30) Priority: 30.05.1997 NL 1006170
(62) Divisional of application: 98201665.1
(71) Applicant: Trioliet Mullos B.V., 7570 AC Oldenzaal (NL)
(72) Inventor: Van der Plas, Nicolaas, 7576 WB Oldenzaal (NL)
(74) Representative: de Vries, Johannes Hendrik Fokke

(57) **Abstract**

In a method for mixing and/or loosening fodder, material to be mixed is introduced into a mixing chamber by means of a loading unit. The material which is present on the loading unit is weighed. A device for mixing and/or loosening fodder comprises a mixing chamber and a loading unit for introducing material to be mixed into a mixing chamber. The device furthermore comprises weighing means for determining the amount of material that is present on the loading unit. A side wall of the mixing chamber can be provided with an opening through which material to be mixed can be introduced into the mixing chamber. The loading unit can pivot between a first position near the floor on which the device is present, and a second position, wherein the loading unit at least partially closes said opening.

## Description

The invention relates to a method and device for mixing and/or loosening fodder. A device of this kind is usually mobile, wherein the device can be filled with the material to be mixed at the location where a stock of said material is present, whilst the mixing and/or loosening of said material can take place during the transport from said location to the location where the mixed fodder is to be delivered, for example in a stable where the cattle to be fed are present.

The object of the invention is to provide a method and device wherein the fodder can be produced in an efficient manner.

According to the invention material to be mixed is introduced into a mixing chamber by means of a loading unit, wherein the material which is present on the loading unit is weighed. The side wall of the mixing chamber may thereby be provided with an opening, and the material to be mixed can be introduced into the mixing chamber through said opening by causing said loading unit to pivot between a first position near the floor on which the device is present, and a second position, wherein the loading unit at least partially closes said opening.

Preferably the material is weighed together with the loading unit, or even together with the mixing chamber, for example by means of sensors for measuring a pressure force, which are mounted in the device, or by measuring the pressure of the hydraulic fluid by means of which the loading unit and any other components of the device are operated.

Said weighing of material to be introduced into a mixing chamber whilst said material is present on a loading unit may be considered to constitute an invention by itself, separate from the other features that have been mentioned.

In one preferred embodiment, the excess of material that is present on the loading unit is removed from said loading unit after said weighing. This may for example be done by means of a closable opening in the loading board, through which an amount of material can fall from the loading board onto the floor, whilst it is also possible to provide the loading board with a discharge unit, which is capable of moving carriers along the material, so that parts of the material are removed.

In another embodiment, an excess of material is removed from the loading unit when said loading unit pivots in order to introduce the material into the mixing chamber. The loading unit moves along a guide plate during said pivoting movement, which guide plate joins the lower edge of the opening in the side wall of the mixing chamber, through which the material is introduced into the mixing chamber, wherein a closable opening is present in said guide plate, through which part of the material can move.

The material which is present on the loading unit may be weighed both before and after part of said material has been removed. A device for carrying out the method will be explained in more detail with reference to the figures.

The invention furthermore relates to a device for mixing and/or loosening fodder, which device is provided with a mixing chamber and with at least one mixing unit which is capable of movement within said mixing chamber, which device comprises means for temporarily reducing the drive power which is required for moving the mixing unit.

When fodder is being mixed, various materials are usually introduced into the mixing chamber, whereby it frequently happens that large chunks of material must be loosened in the mixing chamber in order to be able to mix them with other materials. Said loosening of large chunks of material requires a great deal more energy than the mixing of materials which consist of small parts, however, and this difference in energy stands in the way of a smooth progress of the mixing process.

Further aspects of the invention are disclosed in the description of the figures and/or defined in the claims. Said aspects may be used separately as well as in combination with each other.

The invention will be explained in more detail hereafter with reference to the drawing, which shows a few embodiments of devices for mixing fodder.
Figures 1 - 4 show an embodiment of a device for mixing fodder;
Figures 5 - 8 show another embodiment of a device for mixing fodder;
Figures 9 and 10 show a device comprising a loading unit, on which material can be weighed;
Figures 11 - 14 show another embodiment of a device comprising a loading unit, on which material can be weighed;
Figures 15 - 18 show a mixing unit comprising a radially movable cutting knife;
Figures 19 - 21 show a mixing unit comprising a tangentially movable cutting knife; and
Figures 22 and 23 show a mixing chamber comprising a pivoted cutting knife.

The figures are merely diagrammatic illustrations, wherein corresponding parts are indicated by the same numerals.

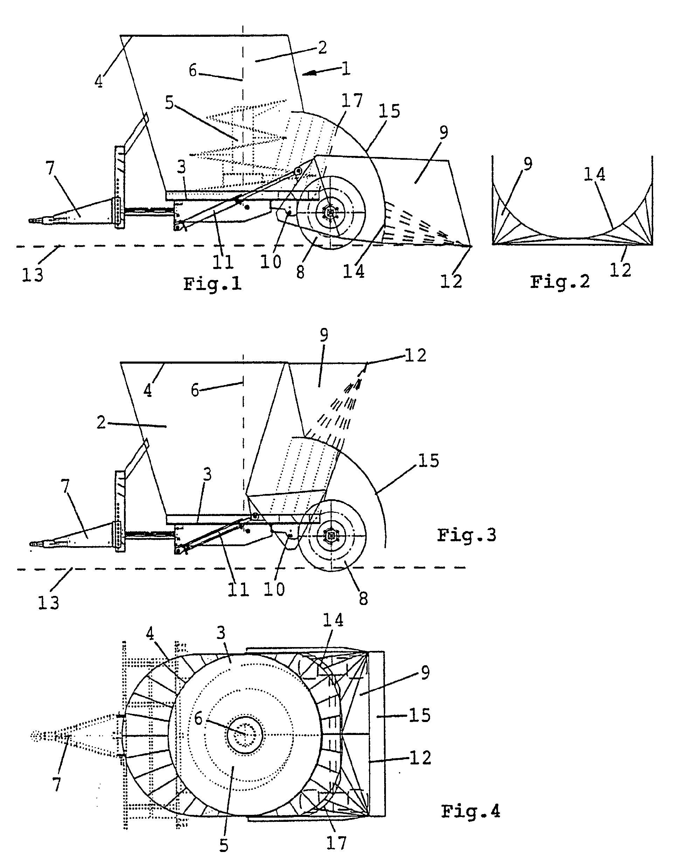

Figure 1 shows a device for mixing fodder in side view. The device comprises a mixing chamber 1 with a side wall 2, which is curved to have an approximately circular shape, seen in plan view, and which diverges in upward direction. The diameter of the mixing chamber near bottom 3 is smaller than near upper edge 4, therefore.

A mixing unit 5, illustrated in dotted lines, is present in the mixing chamber, which mixing unit is capable of rotation about a substantially vertical axis 6. The mixing unit comprises a spirally formed mixing paddle.

The device furthermore comprises means 7 for hitching the device to a tractor, which means 7 may be of a construction which is known per se. The device furthermore comprises two wheels 8, so that the device can be drawn when it is hitched to a tractor.

The device is provided with a loading unit 9, which is capable of pivoting movement about a pin 10 positioned near the bottom 3 of mixing chamber 1, which loading unit functions to fill mixing chamber 1 with material to be mixed. The pivoting of loading unit 9 is controlled by means of hydraulic cylinder 11. Figure 1 shows loading unit 9 to have pivoted downwards, so that a straight edge 12 has been positioned near floor 13, so that the material to be mixed can easily be placed on loading unit 9.

Figure 2 shows loading unit 9 in rear view, wherein the curved edge 14 can be distinguished, which curved edge moves along a guide plate 15 upon pivoting of loading unit 9.

When material has been moved onto loading unit 9 and said loading unit 9 is pivoted upwards about pivot pin 10, the material will fall into mixing chamber 1 upon reaching opening 16 in wall 2 of the mixing chamber, which opening 16 has a curved lower edge 17, which edge joins guide plate 15. Seen in plan view, said lower edge 17 is curved, as is shown in Figure 4.

In the situation which is shown in Figure 3, the loading unit 9 has been moved to its highest position, in which it joins the curved side wall 2 of the mixing chamber. Since side wall 2 and loading unit are both curved, with said curves being contiguous to each other, the mixing chamber does not comprise any so-called lost spaces, in which material can accumulate and in which the mixing intensity is lower than in the other parts of the mixing chamber. The curved shape of loading unit 9 is indicated in dashed lines in Figures 1 and 3.

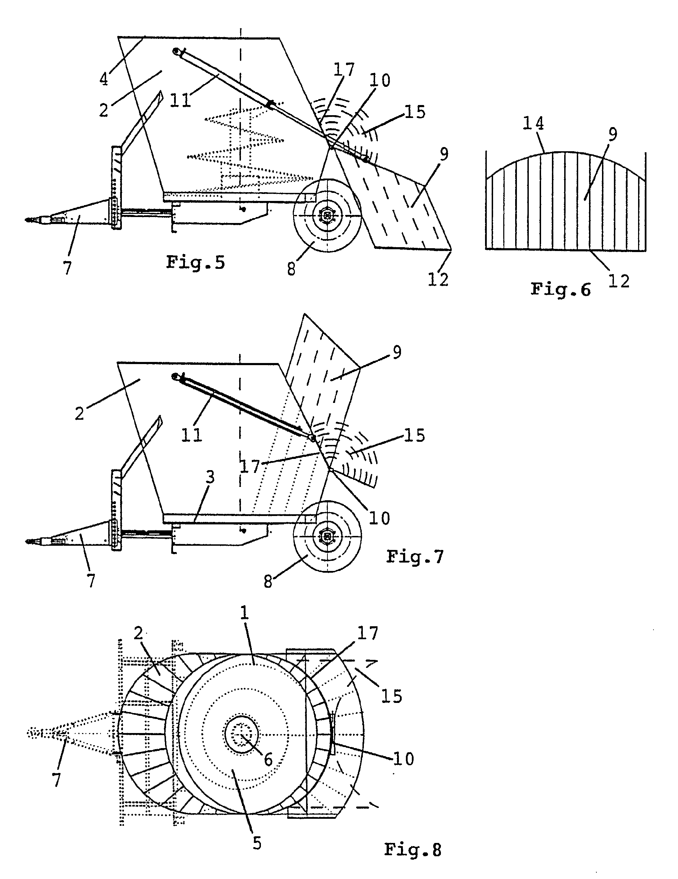

Figure 5 shows another embodiment of a mixing device in side view. The difference with the device described before is the construction of the loading unit 9. In this embodiment loading unit 9 pivots about a pivot pin 10 which is positioned in side wall 2 of mixing chamber 1. Also in this embodiment loading unit 9 has a straight edge 12 and a curved edge 14, which curved edge 14 is capable of joining the curved lower edge 17 of the opening in side wall 2, through which material is introduced into the mixing chamber. The guide plate 15 of this embodiment, which is three-dimensionally curved, is illustrated in dashed lines in Figures 5, 7 and 8. The curved edge 14 of loading unit 9 moves along the surface of guide plate 15.

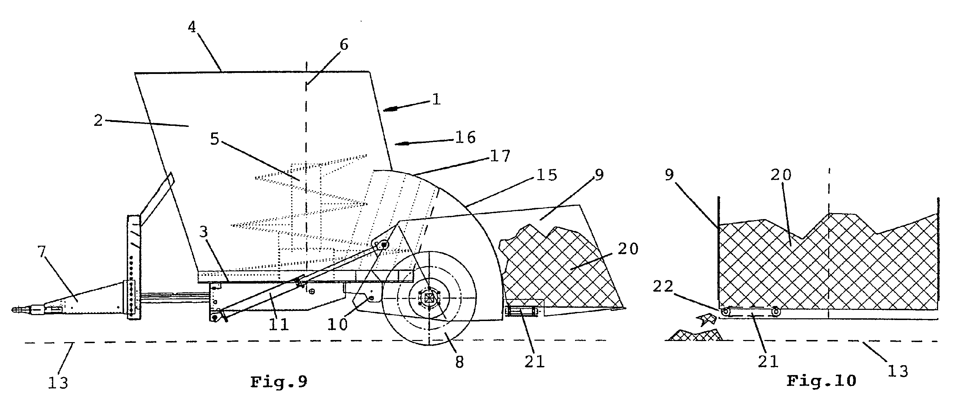

Figures 9 - 14 show embodiments of a device for mixing fodder, wherein the material 20 which is present on loading unit 9 can be weighed, and wherein any excess of material can be removed from loading unit 9. It is essential that exactly the right amounts of material are mixed, on the one hand in order to minimise the cost of the fodder, and on the other hand in order to be able to adapt the fodder optimally to the requirements of the livestock.

According to Figure 9, the device comprises a mixing chamber 1, which has a side wall 2 which is curved, when seen in plan view, and which diverges in upward direction. Accordingly, the diameter of bottom 3 of mixing chamber 1 is smaller than that of upper edge 4. A mixing unit 5 is shown to be present (in dotted lines) in the mixing chamber, which mixing unit is capable of rotation about a vertical pivot pin 6.

The device is provided with means 7 for hitching the device to a tractor, and with wheels 8 for transporting the device. Loading unit 9 can pivot about a horizontal pivot pin 10, wherein loading unit 9 is operated by means of hydraulic cylinder 11.

Present on loading unit 9 is an amount of material 20, which can be introduced into mixing chamber 1, via opening 16 in side wall 2 of the mixing chamber, by pivoting the loading unit 9. The amount of material 20 can be weighed by weighing means (not shown) which are known per se, for example by measuring the hydraulic pressure in cylinder 11. Furthermore it is possible to determine the amount of material 20 by measuring the forces at the location of pivot pin 10 and/or one of the pivot pins by means of which hydraulic cylinder 11 is connected on the one hand to the device and on the other hand to loading unit 9.

When an excess of material 20 is present on loading unit 9, said excess can be removed by means of an endless conveyor belt 21, which is provided with carriers, which move along the material and carry along part of said material. Material 20 can be removed from loading unit 9, via an opening 22, until the desired amount of material 20 is present on the loading unit, which is diagrammatically illustrated in Figure 10, which shows a rear view of loading unit 9.

Once the desired amount of material 20 is present on loading unit 9, the loading unit is pivoted about pivot pin 10, whereby one edge of loading unit 9 moves along guide plate 15, which guide plate joins the curved lower edge 17 of the opening 16 through which the material is introduced into the mixing chamber. In the upwardly pivoted position of loading unit 9, said loading unit joins side wall 2 in such a manner that mixing chamber 2 does not contain any lost spaces, so that an efficient mixing can take place.

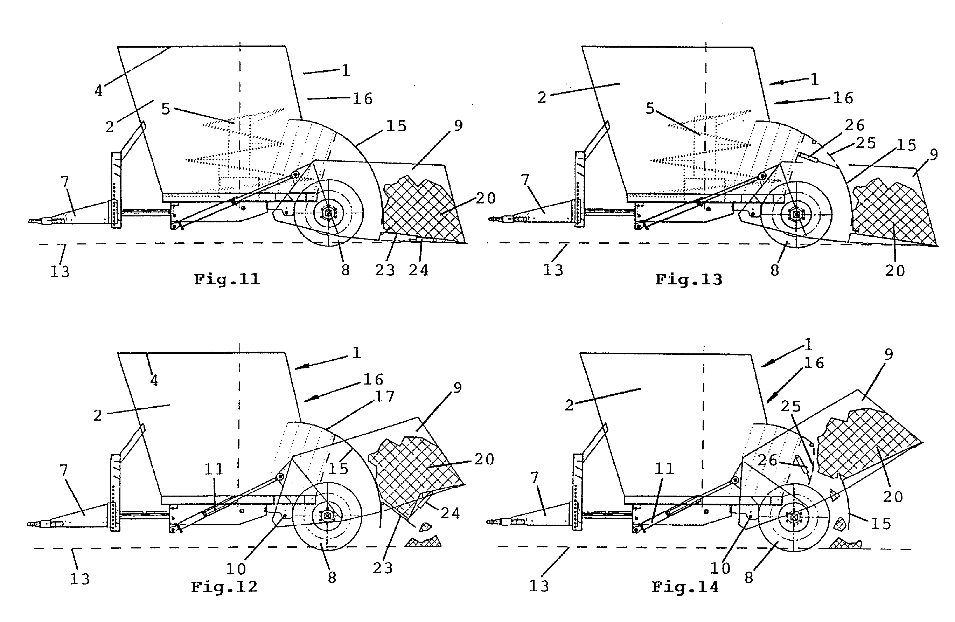

Figures 11 and 12 show an embodiment of a mixing device wherein material 20 can be removed from loading unit 9 by means of a flap 23 in loading unit 9, which flap 23 can be opened (Figure 12) for removing an excess of material 20 from loading unit 9. Flap 23 is operated by means of a hydraulic cylinder 24. Also in this embodiment, weighing means are present for determining the amount of material in loading unit 9.

Figures 13 and 14 show an embodiment wherein an excess of material 20 can be removed from loading unit 9 by opening a flap 25 in guide plate 15. Flap 25 is opened by means of hydraulic cylinder 26. The amount of material 20 which is removed is thereby determined by the degree to which loading unit 9 tilts when flap 25 is opened.

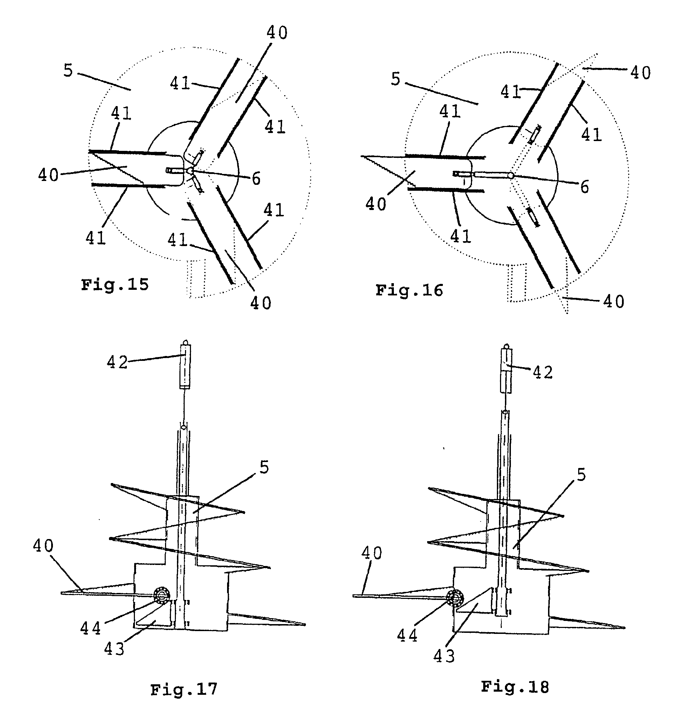

Figures 15 - 18 show a mixing unit 5, which is capable of rotation about a vertical axis, and which is provided with elements 40 in the form of a cutting knife, which elements 40 can be moved in radial direction, so that they can take part in the mixing process to a greater or lesser degree. During the initial stage of the mixing process, when large chunks of material are present in the mixing chamber, the elements 40 can be moved inwards, so that the rotation of mixing unit 5 will require less energy. During a later stage of the mixing process, the elements can be moved radially outwards, so that the intensity of the mixing process is enhanced, which requires less energy during that stage of the mixing process, because the material no longer contains any large chunks. The position of elements 40 may also be determined in dependence on the amount of material being mixed, so that a maximum mixing effect is achieved with the available power at all times.

Figures 15 and 16 diagrammatically show in plan view the elements 40 which are guided by guides 41 during their radial movement. Figures 17 and 18 show a hydraulic actuating cylinder 42, which is capable of moving an operating mechanism 43 in vertical direction. Operating mechanism 43 comprises a sloping surface, on which a rotating cam 44 can roll, which cam is connected to element 40. It will be apparent that vertical movement of operating mechanism 43 will cause element 40 to move in radial direction.

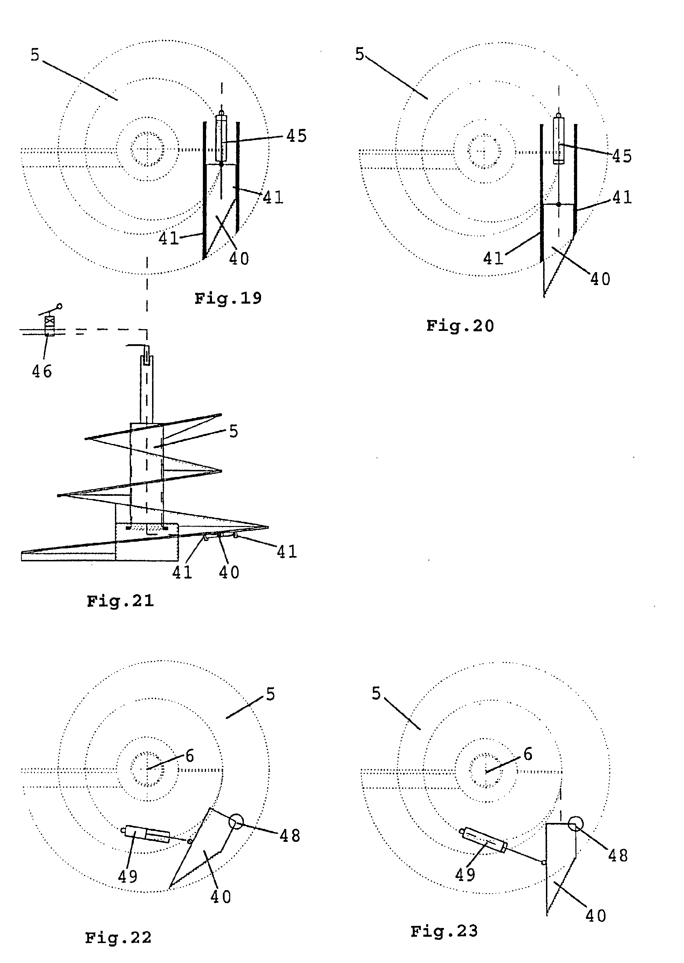

Figures 19 and 20 show in plan view a mixing unit 5, which is illustrated in dotted lines and which is provided with a tangentially movable element 40. Element 40 is moved by means of hydraulic cylinder 45. Figure 21 shows the mixing unit in side view, showing how the hydraulic fluid is supplied by means of control valve 46, so that element 40 can be moved.

Figures 22 and 23 diagrammatically show in plan view an element 40 which is capable of pivoting movement about a vertical pin 48, whereby said pivoting takes place under the control of a hydraulic cylinder 49. Fluid can be supplied to and discharged from cylinder 49 in the manner which is shown in Figure 21. Also in this manner it is possible to vary the mixing action of rotor 5 during the mixing process.

The following devices and methods constitute preferred embodiments.

A device for mixing and/or loosening fodder, which device is provided with a mixing chamber comprising one or more mixing units, which are rotatable about substantially vertical axes, and a side wall, which is at least partially curved, seen in horizontal sectional view, which side wall is provided with an opening, which device is furthermore provided with a loading unit for introducing the material to be mixed into the mixing chamber through said opening, which loading unit can pivot between a first position near the floor on which the device is present, and a second position, wherein the loading unit at least partially closes the opening, wherein said opening has a curved lower edge, and wherein said loading unit is provided with a corresponding curved edge, which is substantially contiguous to said lower edge of the opening in said second position.

A device which is provided with wheels and/or with means for hitching the device to a tractor.

A device wherein the loading unit is capable of pivoting movement about a pivot pin which extends substantially transversely to the direction of movement of the device.

A device wherein the side wall diverges in upward direction.

A device wherein the loading unit has a substantially straight edge of the side remote from its pivot pin.

A device wherein said substantially straight edge of the loading unit can be moved to a position near the floor.

A device wherein a guide wall is present, which joins at least part of the aforesaid curved lower edge of the opening, wherein the shape of at least part of said guide wall substantially corresponds with at least part of the path in which said curved edge of the loading unit moves during its pivoting movement.

A device wherein the loading unit pivots about a pivot pin which is positioned near the bottom of the mixing chamber.

A device wherein the loading unit pivots about a pivot pin which substantially intersects the aforesaid curved lower edge of the opening.

A device wherein the pivot pin intersects the lower edge near the part of the lower edge that is located furthest to the outside, een from the mixing chamber.

A device wherein the pivot pin intersects said lower edge near two spaced-apart locations on the curved lower edge, wherein the loading unit is provided between said locations with a guide wall, whose shape at least partially corresponds with at least part of the path in which the part of the lower edge which is present between said two locations moves with respect to the loading unit.

A method for mixing and/or loosening fodder in a mixing chamber comprising one or more mixing units, which are rotatable about substantially vertical axes, and a side wall, which is at least partially curved, seen in horizontal sectional view, which side wall is provided with an opening, wherein material to be mixed is introduced into the mixing chamber through said opening by causing a loading unit to pivot between a first position near the floor on which the device is present, and a second position, wherein the loading unit at least partially closes the opening, wherein said opening has a curved lower edge, and wherein said loading unit is provided with a corresponding curved edge, which is substantially contiguous to said lower edge of the opening in said second position.

A method wherein the device is provided with wheels and/or with means for hitching the device to a tractor, and wherein the loading unit pivots about a pivot pin which extends substantially transversely to the direction of movement of the device, wherein the device is reversed to a position near a stock of material to be mixed, wherein the loading unit, which comprises a substantially straight edge, is pivoted so that said edge is positioned near the floor.

A method wherein the loading unit is moved with its curved edge along a guide wall during said pivoting movement, which guide wall joins at least part of the aforesaid curved lower edge of the opening.

A method wherein the loading unit is pivoted about a pivot pin which is positioned near the bottom side of the mixing chamber.

A method wherein the loading unit is pivoted about a pivot pin which substantially intersects the aforesaid curved lower edge of the opening.

## Claims

1. A method for mixing and/or loosening fodder, wherein material to be mixed is introduced into a mixing chamber by means of a loading unit, wherein the material which is present on the loading unit is weighed.

2. A method according to claim 1, wherein a side wall of the mixing chamber is provided with an opening, and wherein the material to be mixed is introduced into the mixing chamber through said opening by causing said loading unit to pivot between a first position near the floor on which the device is present, and a second position, wherein the loading unit at least partially closes said opening.

3. A method according to claim 1 or 2, wherein the material is weighed together with the loading unit and/or together with the mixing chamber.

4. A method according to any one of claims 1-3, wherein an excess of material is placed on the loading unit, which excess of material is removed from the loading unit after the amount of material has been determined.

5. A method according to claim 4, wherein said excess of material is removed by partially or completely opening a flap which is present under the material on the loading board, so that part of the material will fall from the loading unit.

6. A method according to claim 5, wherein an amount of material is placed on the loading unit whilst the loading unit at least partially rests on the ground, after which the loading unit is moved in upward direction, whereupon a closable opening in the loading board is opened and part of the amount of material falls from the loading board through said opening.

7. A method according to claim 4, wherein the excess of material is removed by means of a discharge unit which is provided in the loading unit, which discharge unit moves carriers along the material.

8. A method according to claim 4, wherein the material to be mixed is introduced into the mixing chamber through the opening in the side wall of the mixing chamber by causing said loading unit to pivot between a first position near the floor on which the device is present, and a second position, wherein the loading unit at least partially closes said opening, wherein the loading unit is moved along a guide plate which joins the lower edge of the opening, wherein material is removed from the loading unit by opening a closable opening in the guide plate temporarily.

9. A method according to any one of claims 4-8, wherein the amount of material present on the loading unit is weighed before and/or during and/or after the removal of the excess of material.

10. A device for mixing and/or loosening fodder, which device comprises a mixing chamber and a loading unit for introducing material to be mixed into a mixing chamber, and which furthermore comprises weighing means for determining the amount of material that is present on the loading unit.

11. A device according to claim 10, wherein a side wall of the mixing chamber is provided with an opening through which material to be mixed can be introduced into the mixing chamber, wherein said loading unit can pivot between a first position near the floor on which the device is present, and a second position, wherein the loading unit at least partially closes said opening.

12. A device according to claim 10 or 11, wherein said weighing means measure the weight of the material together with at least part of the loading unit and/or together with at least part of the device.

13. A device according to any one of claims 10-12, comprising means for removing material from the loading unit.

14. A device according to claim 13, wherein said means comprise a closable opening in the loading unit, which can be opened in order to allow material to fall from the loading unit.

15. A device according to claim 13, wherein said means comprise a discharge unit comprising carriers which can move along the material.

16. A device according to claim 13, wherein a side wall of the mixing chamber is provided with an opening through which material to be mixed can be introduced into the mixing chamber, wherein said loading unit can pivot between a first position near the floor on which the device is present, and a second position, wherein the loading unit at least partially closes said opening, wherein a guide plate is present, along which the loading unit can move, which guide plate joins the lower edge of the opening, and which is provided with a closable opening for discharging material from the loading unit.
